Europäisches Patentamt

(19) European Patent Office

Office européen des brevets

(11) Numéro de publication: **0 242 263**
**B1**

(12) **FASCICULE DE BREVET EUROPEEN**

(45) Date de publication du fascicule du brevet:
**03.01.90**

(21) Numéro de dépôt: **87400733.9**

(22) Date de dépôt: **03.04.87**

(51) Int. Cl.⁴: **F16G 5/16**

(54) Courroie trapézoïdale de transmission de puissance et son procédé de fabrication.

(30) Priorité: **11.04.86 FR 8605195**

(43) Date de publication de la demande:
**21.10.87 Bulletin 87/43**

(45) Mention de la délivrance du brevet:
**03.01.90 Bulletin 90/1**

(84) Etats contractants désignés:
**AT CH DE ES FR GB IT LI NL SE**

(56) Documents cités:
**WO-A-80/02060**
**DE-A- 1 960 350**
**DE-A- 2 505 228**
**GB-A- 655 173**
**GB-A- 2 030 263**
**US-A- 1 982 869**
**US-A- 3 402 616**

**PATENT ABSTRACTS OF JAPAN,**
**vol. 8, no. 69 (M-286)[1506], 31 mars 1984; &**
**JP-A-58 217 845 (HONDA GIKEN KOGYO**
**K.K.) 17-12-1983**

(73) Titulaire: **HUTCHINSON, 2 rue Balzac, F-75008 Paris(FR)**

(72) Inventeur: **Bouteiller, Christian, 39, Avenue Gaillardin,**
**F-45200 Montargis(FR)**
Inventeur: **Cheymol, André, 15, route de Descartes,**
**F-86220 Dange(FR)**

(74) Mandataire: **Orès, Bernard et al, Cabinet**
**ORES 6, Avenue de Messine, F-75008 Paris(FR)**

## Description

La présente invention est relative à une nouvelle courroie sans fin de transmission de puissance présentant une section trapézoïdale, plus particulièrement destinée à équiper des variateurs de vitesse à poulies à gorge, pour transmettre le mouvement par contact et pression dans la gorge desdites poulies et à un procédé de fabrication d'une telle courroie.

On connaît déjà des courroies comportant une armature constituée par un ou des câble(s) métallique(s) ou des éléments analogues et qui est équipée d'éléments transversaux métalliques ou en un autre matériau à bonnes caractéristiques de résistance mécanique solidarisés entre eux et avec l'armature à l'aide d'un élastomère.

Conformément à FR-A-2 437 531 (VARITRAC) l'armature métallique est constituée par des fils d'acier noyés dans une bande longitudinale continue en caoutchouc, qui est disposée dans des fentes latérales ménagées dans les éléments transversaux, ces derniers présentant une forme trapézoïdale dont la petite base constitue la partie inférieure de chaque élément transversal. La liaison par adhérence des surfaces de la bande de caoutchouc, des fils d'acier et des éléments transversaux est obtenue en les réalisant sous la forme d'un tout unitaire dans lequel le caoutchouc dont est constituée la bande s'étend latéralement entre les éléments transversaux au moins jusqu'aux bords latéraux opposés de ces éléments et au moins sur une partie des parois latérales parallèles qui bordent les évidements. dans les intervalles entre les éléments transversaux aux parois latérales susdites desquels le caoutchouc adhère.

Dans la réalisation selon le Brevet VARITRAC, par conséquent, les câbles métalliques d'armature ne reposent pas directement sur les éléments transversaux, qui sont en règle générale également en métal, le contact métal sur métal des câbles d'armature et des bords des fentes des éléments transversaux étant évité par l'interposition de la bande de caoutchouc dans laquelle sont noyés les câbles d'armature.

En considération du fait que la portée caoutchouc sur métal devrait être de nature à provoquer la destruction de l'élastomère en cas d'application d'une force de traction élevée sur la courroie, par cisaillement sous l'effet de la pression des câbles sur l'élastomère dans les parties de celui-ci les plus proches du fond de la gorge de chacune des poulies, il a été proposé dans FR-A-2 452 035 (DAVID et TETARD) de réaliser une courroie de transmission de section trapézoïdale de manière telle que les câbles d'armature métalliques portent sur le fond de l'évidement ménagé dans chacun des éléments transversaux en métal, ceux-ci présentant un évidement ouvert en direction de leur partie haute avec un fond sensiblement parallèle aux bords inférieur et supérieur de l'élément et des bords latéraux sensiblement parallèles aux côtés latéraux obliques de l'élément.

Une telle structure d'éléments transversaux de courroie trapézoïdale était déjà connue par GB-A-655 173 (PETER et PETER), encore que les éléments transversaux décrits dans ce Brevet soient réalisés en cuir, en matière synthétique ou en fibres vulcanisées et soient montés fixes ou librement déplaçables sur une bande sans fin constituée soit par une bande continue, soit par la juxtaposition de câbles textiles ou métalliques en une couche sans fin ou à extrémités assemblées entre elles.

La réalisation préconisée dans le Brevet DAVID et TETARD s'est cependant avérée présenter des inconvénients importants : dans un variateur de vitesse, une variation de vitesse continue sur une plage de variation importante entraîne que la courroie soit soumise à de grands efforts de tension et de compression latéraux exercés par les flasques des poulies avec lesquelles elle coopère et dont l'une au moins, monté à coulissement, est soumis à l'action d'un vérin hydraulique de commande ; la courroie subit ainsi de très grandes contraintes qui peuvent conduire à sa rupture, laquelle est favorisée par le fait que la déformation résultant de la poussée exercée par le vérin est aggravée par la disposition du ou des câbles d'armature suivant des spires adjacentes à un seul enroulement hélicoïdal qui a pour conséquence de donner aux éléments transversaux une orientation dans le sens de l'hélice, qui augmente encore la déformation de la courroie, à quoi s'ajoute le frottement métal contre métal des câbles d'armature sur le fond de l'évidement de chaque élément transversal, qui provoque l'usure prématurée des câbles. En outre, et à l'exception du Bevet PETER et PETER, les documents antérieurs sont muets quant aux moyens d'arrêt du ou des câbles constitutifs de l'armature après leur mise en tension et préalablement à la mise en place de l'élastomère. Lorsque cet arrêt est obtenu par un sertissage des extrémités du ou des câbles constitutifs de l'armature on constate fréquemment des ruptures de l'armature après une durée de fonctionnement très notablement inférieure à celle que l'on attend de telles courroies dans les mécanismes à variateurs de vitesse qu'elles équipent.

Pour de telles applications, notamment, mais de façon générale pour une bonne transmission de puissance qui est une condition sine qua non de l'emploi des courroies, il importe que leurs flancs latéraux aient un contact surfacique aussi étroit que possible avec les faces internes des flasques des poulies d'une part et, d'autre part, que les éléments transversaux conservent leur direction d'orthogonalité par rapport au plan méridien de la courroie, c'est-à-dire qu'il n'apparaisse pas, au cours du fonctionnement, un positionnement de travers de la courroie par rapport aux flasques des poulies. En ce qui concerne cette dernière condition, il convient de rappeler que le fonctionnement de la courroie implique qu'il existe une possibilité de déplacement relatif des éléments transversaux ou plaquettes par rapport à l'armature longitudinale, de sorte que le problème posé n'est pas celui de fournir une bonne perpendicularité des éléments transversaux par rapport au plan méridien de la courroie lors de la fabrication de cette dernière, ce qui peut être réalisé sans trop de difficultés, mais de garantir que ce positionnement est conservé au cours du fonctionnement.

Une autre condition imposée à de telles courroies, notamment à celles immergées dans un bain liquide comme de l'huile à 120°C, est de réduire autant que faire se peut les phénomènes de résistance hydrodynamique lesquels entraînent, en raison du brassage dudit bain par les ailes des éléments transversaux ou plaquettes, l'apparition de bruits, d'une part, et une diminution du rendement de transmission, d'autre part.

La présente invention s'est donc fixé pour but de pourvoir à une courroie trapézoïdale de transmission de puissance qui répond mieux aux nécessités de la pratique que la meilleure des solutions préconisées dans l'Art antérieur, notamment en ce qu'elle résiste aux efforts de poussée latéraux même appliqués avec une très grande force, en ce qu'elle évite l'usure prématurée des câbles d'armature, en ce qu'elle élimine pratiquement le risque de déformation de la courroie, en ce qu'elle conserve l'intégrité structurelle de son armature même après une durée de fonctionnement importante, et en ce qu'elle assure un excellente transmission tant en ce qui concerne le rendement que l'absence de bruits ou d'autres facteurs perturbants.

Un autre but de l'invention est de fournir un procédé de fabrication d'une courroie trapézoïdale de transmission perfectionnée.

Ces buts sont atteints, par la présente invention par une courroie sans fin de transmission de puissance de section trapézoïdale, qui comporte une armature longitudinale constituée par un organe résistant à la tension ou une pluralité de tels organes comme des câbles, notamment en métal, en fibres de verre, ou en tout matériau synthétique présentant une forte résistance à la tension, des éléments transversaux métalliques ou en tout autre matériau présentant une bonne résistance à la compression et une masse d'élastomère qui solidarise les éléments transversaux entre eux et avec l'armature longitudinale, laquelle courroie est caractérisée en ce que l'armature longitudinale est bloquée au droit d'au moins un élément transversal par effet de pincement entre ledit élément, ou une partie dudit élément, et une pièce coopérant avec lui comme une barette ou analogue, et qui en est rendu solidaire par tout moyen approprié dans les zones de contact dudit élément et de ladite pièce, exclusivement.

Une telle disposition qui assure l'immobilisation par blocage, pincement ou coincement de l'armature longitudinale par rapport aux éléments transversaux pour une force inférieure à une valeur donnée, prédéterminée, ne s'oppose pas toutefois à un mouvement relatif de faible amplitude des éléments transversaux par rapport à ladite armature, au cours du fonctionnement de la courroie, un tel mouvement relatif permettant d'assurer une répartition régulière des contraintes en l'absence de laquelle on assisterait à la rupture immédiate du dispositif.

Dans une forme de réalisation selon laquelle les éléments transversaux sont en métal, par exemple en acier, l'effet de pincement des extrémités de l'armature longitudinale est assuré par des pièces métalliques sensiblement de même épaisseur que celle des éléments avec lesquels elles coopèrent et avec lesquels elles sont solidarisées par soudure par points.

Dans un mode d'exécution préféré, la soudure par points est une soudure par rayon laser, la précision de cette technique permettant une soudure de la pièce d'immobilisation à l'élément transversal avec lequel elle coopère sans toucher l'armature longitudinale qui conserve ainsi toutes ses propriétés mécaniques.

Selon une autre caractéristique de l'invention, les éléments transversaux et les pièces coopérant avec eux pour l'arrêt des extrémités longitudinales de l'armature sont conformés en correspondance, notamment dans leurs parties destinées à être solidarisées entre elles.

Dans un mode d'exécution préféré, dans lequel l'armature longitudinale est constituée par une nappe de câbles les parties des éléments transversaux sur lesquelles sont disposés les câbles sont découpées suivant une pluralité d'encoches pour ménager des logements partiels desdits câbles et les pièces coopérant avec lesdits éléments transversaux pour le blocage par pincement ou coincement de l'armature longitudinale sont alors conformées suivant des barrettes plates qui prennent appui sur les zones analogues à des merlons de l'élément transversal avec lequel elles coopèrent.

Dans une variante, la pièce de blocage de l'armature longitudinale est une barrette dont une face est plane et dont l'autre présente des gorges disposées en correspondance des câbles qu'elle est destinées à pincer ou coincer.

Dans encore une autre variante, la pièce de blocage est conformée suivant une barrette obtenue par déformation de métal et épouse ainsi, en partie, le contour apparent de la nappe de câbles tant sur sa face au contact desdits câbles que sur la face opposée à celle-ci.

La présence des encoches de réception des câbles découpées dans les éléments transversaux, d'une part, et l'immobilisation par blocage, pincement ou coincement des extrémités de l'armature longitudinale, d'autre part, permet la fabrication d'une courroie perfectionnée selon l'invention par les méthodes modernes de moulage par injection d'élastomère dont on sait qu'elles peuvent être conduites à des pressions très importantes, d'un ordre de grandeur dix fois plus grand que celui des pressions mises en oeuvre dans les techniques usuelles de moulage par compression.

Dans une autre forme de réalisation, on prévoit de réaliser l'arrêt des extrémités longitidunales de l'armature à l'aide de pièces de plus petite envergure que celles des éléments transversaux, de sorte que c'est seulement sur une partie de l'élément transversal qu'a lieu le contact dudit élément et de ladite pièce.

Selon une autre caractéristique de l'invention, l'armature longitudinale de la courroie repose dans les encoches ménagées dans chacun des éléments transversaux, avec interposition d'une mince couche d'élastomère entre l'armature et lesdites encoches.

Dans un mode de réalisation c'est ladite encoche qui est garnie d'une mince ou très mince couche d'élastomère.

Dans un autre mode de réalisation le ou les câbles qui forme(nt) l'armature longitudinale est (sont) revêtu(s) d'une mince gaine d'élastomère dont l'épaisseur est du même ordre de grandeur que celui de la couche mentionnée ci-dessus.

Selon encore une autre caractéristique de l'invention et dans le cas d'une armature longitudinale à un ou plusieurs câble(s) celui-ci (ceux-ci) est (sont) disposé(s) suivant une nappe formant une hélice simple ou une hélice double, chaque spire du ou des câbles étant logée dans l'une des encoches de la pluralité d'encoches juxtaposées ménagées dans chaque élément transversal.

Dans le cas d'une hélice double, les deux hélices sont équitendues et de pas contraires.

Un dispositif selon l'invention, à spires du ou des câbles partiellement logé(s) dans les encoches ménagées dans chaque élément transversal permet de rapprocher le contact entre un câble donné et chaque élément transversal de la fibre neutre du câble, d'augmenter la surface sur laquelle s'exerce la pression d'un facteur X et de diviser par voie de conséquence, d'un facteur semblable, la valeur de la pression exercée par chaque câble par unité de surface de chaque élément transversal.

De plus, du fait du logement des câbles dans les encoches susdites, les câbles sont maintenus strictement en place lors du moulage de l'élastomère de solidarisation des éléments transversaux à l'armature longitudinale.

En outre, une telle disposition qui rend aussi proche que possible de la fibre neutre du câble le contact entre celui-ci et chaque élément transversal permet de diminuer les effets néfastes dus aux à-coups qu'introduisent les variations du couple moteur lors de l'utilisation de la courroie dans un variateur de vitesse.

Dans une réalisation particulièrement préférée de l'invention, les éléments transversaux sont des plaquettes dont les bords latéraux sont reliés sur leur côté extérieur de plus grande dimension par un bord sensiblement rectiligne, -à l'exception des encoches de logement partiel des câbles de l'armature-, et sur leur côté interne opposé de plus petite dimension, par un bord rectiligne ou courbe, à concavité tournée vers l'intérieur de la courroie.

Une telle disposition, qui supprime les parties analogues à des ailes ou ailettes des éléments antérieurs connus réduit considérablement le brassage du bain liquide dans lequel est immergée la courroie, avec pour conséquence une diminution du bruit de fonctionnement et une amélioration du rendement de transmission.

Ce dernier est encore augmenté lorsque, conformément à une autre caractéristique de l'invention, la résistance hydrodynamique est diminuée, en même temps qu'est allégée la courroie, par la présence d'évidements dans les plaquettes constitutives des éléments transversaux.

En outre, cette même suppression des parties en formes d'ailettes des réalisations antérieures connues permet d'augmenter, pour une même largeur de courroie, la longueur disponible pour le positionnement des câbles ou analogues de l'armature longitudinale, de sorte qu'une quantité plus importante d'élastomère de liaison peut être prévue entre chacun des câbles ou analogues constitutifs de l'armature ce qui diminue d'autant la fatigue desdits câbles ou analogues.

Complémentairement, le plus grand écartement entre câbles existant dans cette réalisation préférée permet de faciliter la solidarisation de la pièce d'arrêt et de la plaquette associée pour le blocage de l'armature longitudinale en n'exigeant pas un outillage trop précis pour la soudure.

Selon l'invention, on prévoit aussi d'améliorer les caractéristiques de la courroie en utilisant, pour le matériau élastomère de solidarisation des éléments transversaux entre eux et avec l'armature longitudinale, un matériau élastomère à module d'Young élevé.

L'emploi d'un matériau présentant ces caractéristiques entraîne la formation dans la courroie d'un couple de rappel qui tend à s'opposer à la mise de travers des plaquettes par rapport au plan méridien de la courroie dès l'apparition d'une éventuelle perte d'orthogonalité des plaquettes par rapport audit plan avec, pour conséquence, la conservation des qualités de fonctionnement requises.

Outre l'avantage qui vient d'être décrit, l'emploi d'un matériau élastomère à module d'Young élevé en tant que matériau de liaison des plaquettes entre elles et à l'armature longitudinale permet, après fabrication de la courroie, de procéder à une rectification des flancs latéraux de la courroie, au sens de ce terme dans la technique de l'usinage des métaux ou alliages métalliques.

Un tel usinage ou rectification permet alors, d'une part, d'assurer un contact surfacique aussi bon que possible entre les faces internes des flasques des poulies et les flancs de la courroie et, d'autre part, de supprimer de possibles irrégularités de forme des flancs susceptibles d'entraîner la mise de travers de la courroie par rapport aux flasques.

Complémentairement, l'opération d'usinage ou de rectification qui supprime, lors de la fabrication, aussi bien les petits débris ou fragments d'élastomère que ceux d'acier constitutifs des éléments transversaux ou plaquettes a pour conséquence que la courroie peut être mise en oeuvre sans rodage et en évitant toute introduction de débris de caoutchouc ou d'acier dans le bain huile ou analogue où elle est immergée.

Pour l'obtention d'un élastomère à module d'Young élevé l'invention prévoit, dans une première forme de réalisation, de charger ledit élastomère à l'aide de fibres, par exemple des fibres en matières naturelles ou synthétiques, comme des fibres de polyester ou des fibres aramide du type de celles connues sous le nom de Kevlar (une Marque déposée de DUPONT DE NEMOURS).

De bon résultats ont été obtenus avec une quantité de fibres comprise entre 5 et 30 % en poids du mélange. Au moins 30 % des fibres de la charge, dont la distribution dans le matériau élastomère est aléatoire, ont cependant une direction sensiblement satisfaisante pour le but recherché, c'est-à-dire une augmentation de la raideur transversale qui ne porte toutefois pas atteinte aux caractéristiques de flexion longitudinale.

Dans une forme de réalisation préférée, l'élastomère était un caoutchouc du type epichlorohydrine, par exemple celui connu sous le nom HYDRIN ( une marque déposée The B.F. GOODRICH Cy) chargé à l'aide de fibres textiles ou d'aramides fournissant un élastomère à module d'Young élevé.

L'invention a également pour objet un procédé de fabrication d'une courroie trapézoïdale de transmission comportant une armature longitudinale constituée par un organe filiforme ou une pluralité de tels organes comme des câbles, notamment en métal, en fibres de verre ou en tout matériau synthétique présentant une forte résistance à la tension, des éléments transversaux métalliques ou en un matériau présentant une forte résistance à la compression, ainsi qu'une masse d'élastomère qui solidarise les éléments transversaux entre eux et avec l'armature longitudinale, après que lesdits éléments transversaux aient été mis en place sur un noyau à fentes périphériques radiales et que l'armature ait été disposée sur lesdits éléments et mise sous tension, caractérisé en ce que l'on rapporte sur au moins un desdits éléments transversaux une pièce de blocage des extrémités de ladite armature longitudinale, en ce que l'on applique à force ladite pièce sur ledit élément transversal pour bloquer par pincement ou coincement les extrémités de l'armature, en ce que l'on solidarise entre eux ladite pièce et l'élément transversal avec lequel elle coopère et en ce que l'on moule ensuite l'élastomère.

Dans un mode de réalisation avantageux, les moignons de l'armature longitudinale, c'est-à-dire les parties de ladite armature qui s'étendent entre l'extrémité non fixée à un élément transversal et la zone de blocage sur ledit élément sont également coincées à leur extrémités libres sur un élément transversal voisin de celui déjà utilisé pour le coincement de ladite armature.

Dans un mode d'exécution, la fixation de la ou des pièces de pincement ou de coincement de l'armature longitudinale sur l'élément transversal avec lequel elle coopère est réalisé par une soudure par points.

Dans un mode d'exécution particulièrement avantageux, la soudure par points est une soudure par rayon laser.

Le moulage de l'élastomère a lieu par compression, à une pression de l'ordre de 150-200 bars.

Dans un autre mode d'exécution, préféré, le moulage de l'élastomère a lieu par injection, à une pression notablement supérieure à celle utilisée pour la compression et qui peut être de l'ordre de 1500 à 1800 bars.

L'invention sera bien comprise par la description qui va suivre, faite en référence au dessin annexé dans lequel :

- la Figure 1 est une vue en coupe transversale d'une courroie conforme à la présente invention pour une première forme de réalisation, la coupe étant effectuée au droit d'un élément transversal et avec omission, pour des raisons de simplification du dessin, de l'élastomère de solidarisation des éléments transversaux avec l'armature longitudinale ;

- la Figure 2 est une vue analogue à celle de la Figure 1, d'un autre mode de réalisation de la courroie conforme à la présente invention ;

- la Figure 3 est une vue schématique, en perspective d'un mode de réalisation d'une courroie conforme à l'invention ;

- la Figure 4 est une vue schématique partielle, en coupe longitudinale développée, d'une courroie conforme à la présente invention ;

- la Figure 5 est un schéma explicatif destiné à illustrer une phase du procédé de fabrication d'une courroie selon l'invention ;

- la Figure 6 est une vue schématique illustrant une autre phase du procédé de fabrication selon l'invention ;

- la Figure 7 est une autre vue schématique illustrant le procédé de fabrication et le produit obtenu par sa mise en oeuvre ;

- la Figure 8 illustre encore une autre phase du procédé de fabrication ;

- les Figures 9 à 12 montrent schématiquement différentes réalisations de pièces de blocage pour la réalisation de courroies selon l'invention ;

- la figure 13 est une vue en élévation d'une plaquette de courroie perfectionnée selon l'invention pour une autre réalisation ;

- la figure 14 montre la plaquette selon la figure 13, l'armature longitudinale qui est associée à la courroie, mais sans l'élastomère de solidarisation ;

- la figure 15 est une vue analogue à celle de la figure 2 mais avec représentation de l'élastomère et pour un autre mode de réalisation ;

- la figure 16 est une vue schématique, en perspective, d'une courroie conforme à l'invention comportant des plaquettes selon la figure 13 ;

- les figures 17 à 20 sont des vues analogues à celle de la figure 15 mais pour des variantes de réalisation.

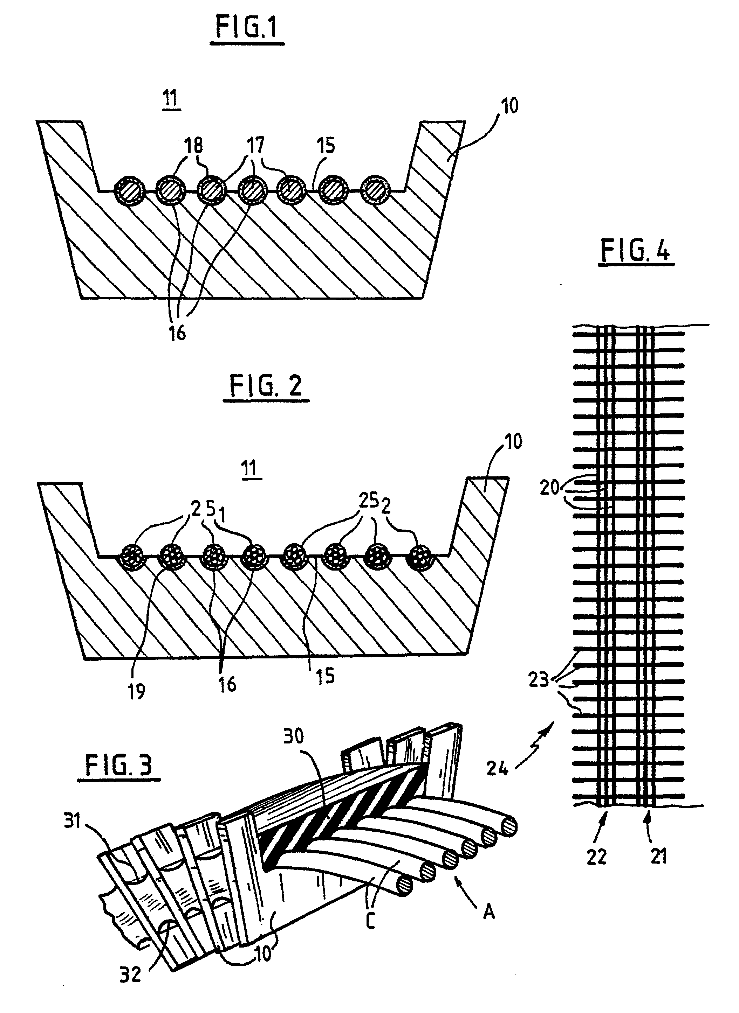

Dans un premier type de réalisation, la courroie trapézoïdale de transmission conforme à la présente invention se compose d'une pluralité d'éléments transversaux 10 de forme trapézoïdale, de préférence en métal de grande dureté, comme de l'acier de nuance 35 NC6 ou 35 CD4 trempé et revenu pour des duretés de l'ordre de 64 Hrc, en matière synthétique rigide ou en tout autre matériau présentant une bonne résistance à la compression et à la partie supérieure desquels est ménagé un évidement 11 dont le fond 15 reçoit une pluralité de câbles C de préférence en acier, mais qui peuvent également être réalisés en fibres de verre ou en fibres synthétiques par exemple en KEVLAR (une Marque déposée de DUPONT DE NEMOURS) présentant une grande résistance à l'usure, dont l'ensemble forme l'armature longitudinale A de la courroie trapézoïdale. Les éléments transversaux 10 sont solidarisés entre eux et à l'armature longitudinale par une masse d'élastomère 30 qui remplit partiellement les évidements 11 des éléments transversaux et les espaces séparant des éléments transversaux consécutifs dans le sens longitudinal de la courroie (figure 3). La masse d'élastomère est conformée pour que le taux d'allongement et le taux de compression, donc de déformation, soit le plus faible possible et, en tous cas, suffisant pour que le nombre de cycles de déformation soit supérieure à $10^8$. Dans les formes de réalisation décrites et représentées en référence aux figures 1 à 12, la masse d'élastomère présente, entre les éléments transversaux 10, une surface externe 31 à concavité tournée vers l'extérieur et une surface interne 32 de plus petit rayon moyen à concavité tournée vers l'intérieur.

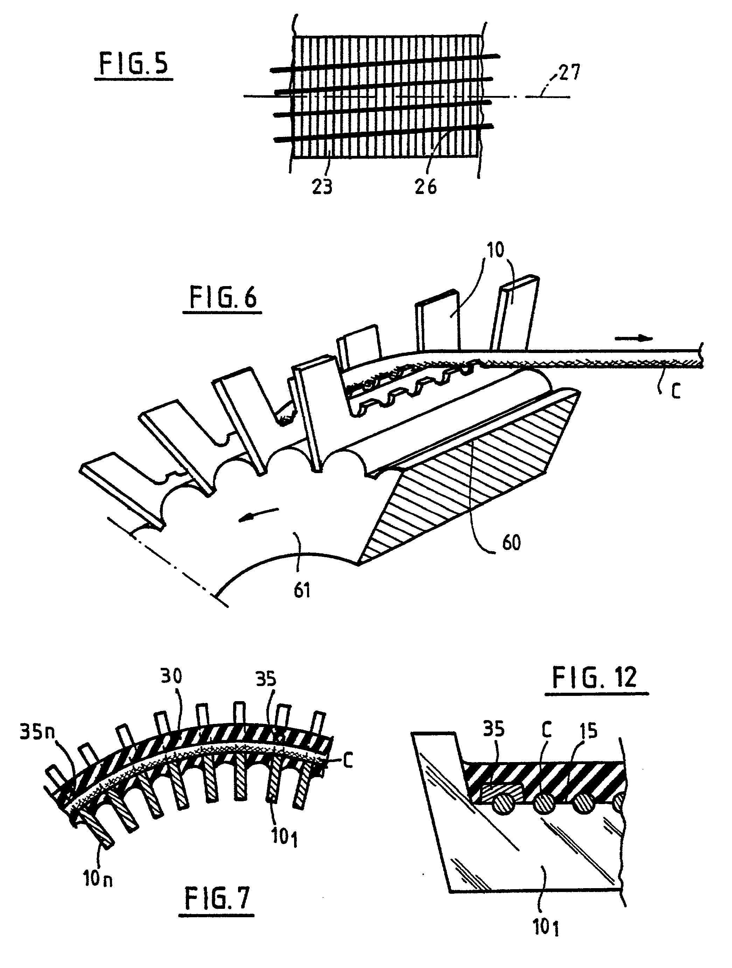

Conformément à une première caractéristique de l'invention, l'armature longitudinale est bloquée au droit d'au moins un élément transversale $10_1$, Figure 7, par effet de pincement ou de coincement entre ledit élément ou une partie dudit élément et une pièce 35, comme une barrette ou analogue, coopérant avec ledit élément $10_1$ et qui en est rendue solidaire dans les zones de contact dudit élément et de ladite pièce, exclusivement.

La solidarisation de la pièce 35 et de l'élément transversal $10_1$ est réalisée de manière à permettre un mouvement relatif dudit élément transversal par rapport au(x) câble(s) lors du fonctionnement de la courroie, tout en s'opposant à un tel mouvement relatif pour des forces de tension sur le ou les câbles inférieures à une valeur prédéterminée.

La pièce 35, de blocage par pincement des extrémités du ou des câbles constitutifs de l'armature longitudinale, est avantageusement une barrette métallique de même épaisseur que les éléments transversaux 10 et qui est conformée pour serrer le ou les câbles entre le fond 15 de l'élément $10_1$ et ladite barrette.

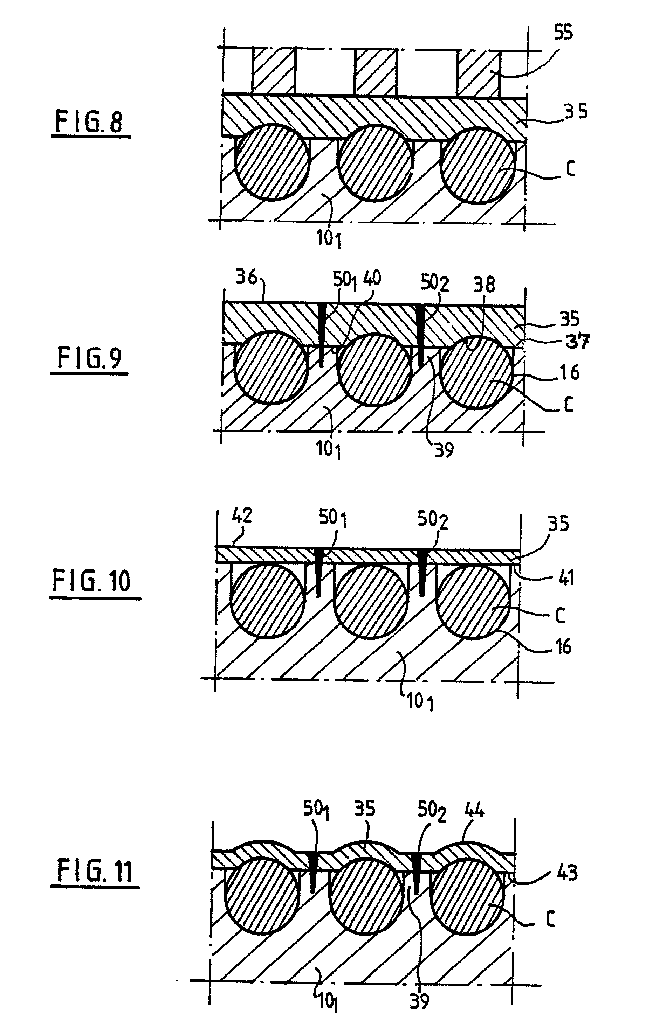

Dans un mode d'exécution, la pièce 35 de blocage par pincement des extrémités du ou des câbles constitutif(s) de l'armature longitudinale est sensiblement de même longueur (mesurée perpendiculairement à la direction de l'armature) que celle du fond 15 comme montré schématiquement sur les Figures 9 à 11 qui sont des vues partielles.

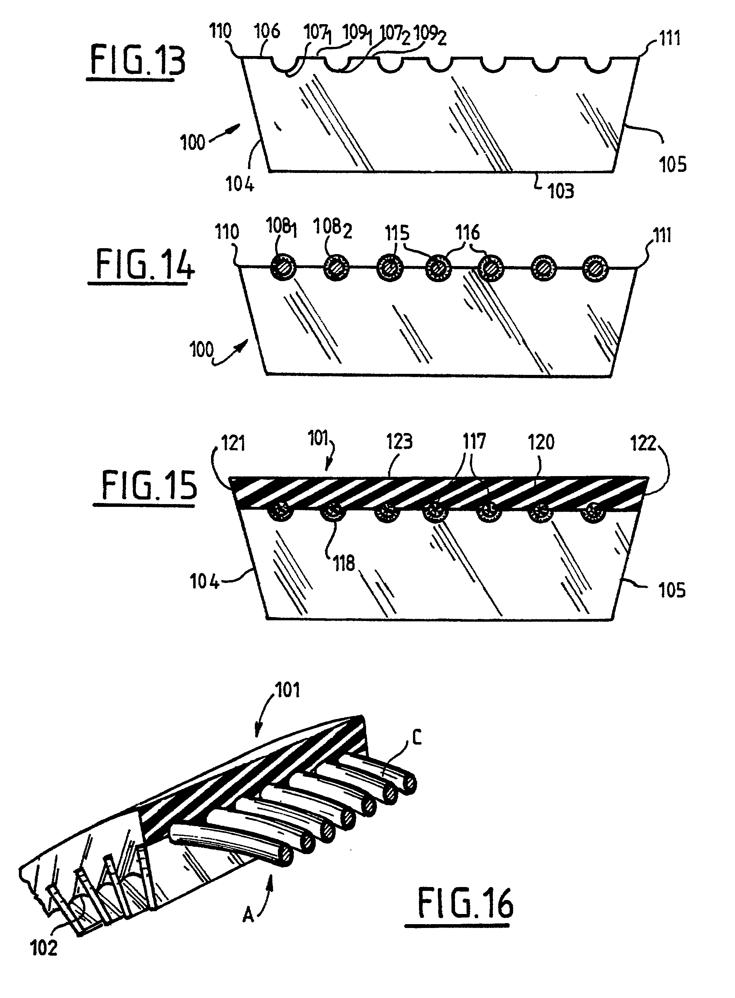

Dans un autre mode d'exécution, Figure 12, la pièce 35 de blocage par pincement des extrémités du câble constitutif de l'armature longitudinale est une barrette dont la longueur est une fraction seulement de la longueur du fond 15, juste suffisante pour chevaucher le câble et prendre appui sur la pièce $10_1$ de part et d'autre du câble uniquement.

Conformément à une autre caractéristique de l'invention, on prévoit de découper le fond de l'évidement 11 de chaque élément suivant une pluralité d'encoches pour ménager des logements partiels du ou des câbles constitutif(s) de l'armature longitudinale de la courroie.

Dans les réalisations représentées, chaque élément transversal ou plaquette 10 est découpé suivant des encoches 16, juxtaposées, dont le nombre est égal au nombre de spires du ou des câbles constituant l'armature longitudinale de la courroie. Cette disposition permet de rapprocher l'axe de chaque spire du câble de la zone de contact entre chaque spire et la plaquette 10 pour améliorer la progressivité, sans à-coups, de la variation du mouvement dans une plage de variation de l'ordre de cinq à six sans que les dimensions ni le poids du variateur de vitesse comprenant une courroie selon l'invention soient affectés de façon désavantageuse.

Dans une telle réalisation, un premier mode d'exécution prévoit de conformer la barrette 35 comme montré sur la Figure 9, c'est-à-dire avec une face externe 36 plane et une face interne 37 présentant des gorges 38 au contact des câbles C et des parties rectilignes 40 au contact des zones 39, analogues à des merlons, qui séparent les encoches 16 de la plaquette $10_1$.

Dans la forme de réalisation montrée sur la Figure 10, les plaquettes 10 présentent des encoches 16 de plus grande profondeur que celle de la réalisation décrite en référence à la Figure 9 et la barrette 35 est une barrette droite à face externe 41 et face externe 42, planes. L'utilisation d'une barrette plane permet un positionnement relatif plus simple que dans le cas d'une barrette à gorges.

Une barrette de ce dernier type est également montrée sur la Figure 11. Dans cette réalisation, la barrette 35 est obtenue par déformation de métal et elle épouse, aussi bien sur sa face interne 43 que sur sa face externe 44, le contour apparent de la nappe de câbles C avec, ici aussi, des zones de contact de la face interne 43 avec les parties 39, analogues à des merlons, de l'élément $10_1$.

Quel que soit le mode de réalisation, l'invention prévoit de solidariser la barrette 35 et la plaquette $10_1$ par une soudure par points, un peigne 55 assurant la pression requise lors de la soudure (Figure 8).

Dans une réalisation préférée, la soudure par points est une soudure par rayon laser effectuée, comme montrée par les références $50_1$, $50_2$, etc ... dans les zones de contact de la face interne de la barrette et de l'élément transversal $10_1$, avec lequel elle coopère.

Conformément à une autre caractéristique de l'invention, on prévoit d'éviter l'usure par frottement du ou des câbles sur le fond 15 de l'évidement 11 en interposant une mince couche d'élastomère entre le ou lesdits câbles et ledit fond de l'évidement découpé suivant les encoches 16.

Dans une réalisation, la mince couche d'élastomère 19 tapisse chacune des encoches 16 sur une faible ou très faible épaisseur, Figure 2.

Dans une autre réalisation, la mince couche d'élastomère interposée est constituée par une gaine 16 qui enrobe le ou les câbles de l'armature longitudinale de la courroie conforme à la présente invention Figure 1.

Pour la fabrication d'une courroie selon l'invention, on dispose d'abord les plaquettes 10 dans les fentes périphériques radiales 60 d'un noyau de confection 61, Figure 6, puis on met en place le ou les câbles C en fixant une de leurs extrémités à l'aide d'une barrette 35, comme indiqué ci-dessus; on exerce alors une tension contrôlée sur le ou les câbles placés suivant une nappe de spires rapprochées en partie logées dans les encoches 16 ménagées dans le fond 15 des évidements 11 des plaquettes. Lorsque la tension requise est atteinte, on fixe le ou les câbles C d'une façon analogue à celle décrite ci-dessus à l'aide d'une barrette 35, à leur autre extrémité et le ou les câbles sont sectionnés. Les "moignons" du ou des câble(s) de l'armature, c'est-à-dire les parties demeurant libres après sectionnement sont alors avantageusement rabattues sur les plaquettes 10 et bloquées à l'aide d'une barrette $35_n$ sur une plaquette $10_n$ de la même façon que celle décrite ci-dessus pour la barrette 35 et la plaquette $10_1$ (Figure 7).

L'élastomère 30 est alors rapporté par un procédé de moulage en compression, sous une pression d'environ 150 bars ou, de préférence, par un procédé de moulage par injection, effectué à une pression notablement plus élevée, de l'ordre de 1800 bars, mais d'une durée notablement plus courte, de l'ordre de quelques minutes.

Par un choix approprié de la pression appliquée par le peigne 55 lors de l'opération de soudure par points, le blocage des extrémités do ou des câbles constitutifs de l'armature longitudinale est suffisant pour s'opposer aux pressions mises en oeuvre lors du moulage. Au maintien en position des spires du ou des câbles de l'armature contribue également le fait que lesdites spires sont en partie logées dans les encoches 16.

Conformément à l'invention, le ou les câble(s) 20 qui forment l'armature longitudinale de la courroie trapézoïdale 24 sont disposés, comme le montre très schématiquement la Figure 4, suivant une ou plusieurs hélices 21, 22 équitendues, de pas contraires, qui empêchent le gauchissement des éléments transversaux 23 qui sont solidarisés avec ledit ou lesdits câbles 20, sous l'effet des poussées latérales aux-quelles est soumise la courroie 24, en fonctionnement.

Dans une telle réalisation les spires des câbles sont, en fait, inclinées sur la direction longitudinale de la courroie, bien que ceci n'apparaisse que difficilement sur la Figure 4. Pour la mise en place du ou des câbles, de façon analogue à celle décrite ci-dessus, on prépare d'abord un empilement d'éléments transversaux ou plaquettes 23, Figure 5, dont le fond 15 des évidements 11 est usiné suivant des saignées 26 inclinées sur la direction longitudinale 27 de la courroie développée, pour définir le tracé hélicoïdal souhaité des encoches 16 lorsque les éléments transversaux ou plaquettes 23 sont mis en place sur le noyau de confection 61. Le ou les câbles peuvent être sous forme de spires à un seul enroulement ou de spires à deux enroulements de pas contraires dirigés des bords latéraux de la courroie vers le plan médian de celle-ci.

Dans le mode de réalisation représenté à la Figure 1, chacune des encoches 16 ménagées dans le fond 15 de l'évidement 11 de chaque plaquette 10 reçoit une spire d'un câble 17 en matériau présentant des propriétés mécaniques élevées, tel qu'acier par exemple, enrobé d'une gaine 18 en élastomère, de faible épaisseur, tandis que dans le réalisation à deux câbles $25_1$, $25_2$ représentée à la Figure 2, ce sont les encoches 16 juxtaposées qui sont tapissées d'une mince couche 19 d'élastomère, les spires des câbles logés dans lesdites encoches 16 pouvant être celles de câbles toronnés du commerce en acier laitonné ou analogue.

Bien que l'on ait décrit ci-dessus le coincement du ou des câbles de l'armature sur deux éléments transversaux $10_1$ et $10_n$, il est bien entendu qu'un tel pincement ou coincement peut avoir lieu sur d'autres éléments mais en nombre discret.

Dans un second type de réalisation, figures 13 à 20, les éléments transversaux 100, solidarisés entre eux et à l'armature longitudinale A par une masse d'élastomère 101 à surface intérieure 102 tournée vers l'intérieur et à faible rayon de courbure (figure 16), ont une forme générale trapézoïdale, à bords latéraux 104 et 105 dirigés obliquement par rapport au bord externe 106 et au bord interne 103, les arêtes d'intersection du bord 106 et des bords latéraux 104 et 105 étant désignées par 110 et 111, respectivement. Le bord 106 est découpé suivant des encoches $107_1$, $107_2$, etc... en nombre correspondant à celui des spires $108_1$, $108_2$, etc... du ou des câbles 115 constitutif(s) de l'armature longitudinale A et on désigne par $109_1$, $109_2$, etc... les parties rectilignes du bord 106 entre deux encoches consécutives.

Le ou les câbles 115 constitutif(s) de l'armature et qui est (sont) partiellement logé(s) dans les encoches 107 est (sont) enrobé(s) d'une gaine 116 en élastomère de faible épaisseur, comme montré sur la figure 14 ou, en variante, les câbles ou câblés 117 sont logés dans les encoches 107 après que le fond de celles-ci ait été tapissé d'une mince couche d'élastomère 118, figure 15.

Quelle que soit la réalisation, les câbles C de l'armature A sont fixés au moins à leurs extrémités, ou au voisinage de celles-ci, par pincement entre une plaquette ou partie de plaquette 100 et une barrette ou analogue rendue solidaire d'un plaquette par soudure, avantageusement par rayon laser, sur une ou des parties comme 109 du bord 106 ; le fait que lesdites parties soient de plus grande longueur que dans les réalisations décrites précédemment permettant d'utiliser un outillage de soudure moins précis et donc moins coûteux tout en permettant d'accroître la tenue à la fatigue des câbles C en raison de la plus grande épaisseur d'élastomère entre spires adjacentes.

L'élastomère 101, mis en oeuvre pour solidariser entre elles les plaquettes 100 et lesdites plaquettes avec l'armature longitudinale A, est moulé par compression ou par injection pour constituer une masse comportant un chapeau 120 à section droite sensiblement trapézoïdale avec des flancs latéraux 121 et 122 sensiblement dans le prolongement des bords 104 et 105 des plaquettes et un bord externe 123, sensiblement parallèle au bord 106 desdites plaquettes, ledit chapeau étant d'un bloc avec les masses d'élastomère à surface interne 102 à concavité tournée vers l'intérieur et qui sont présentes entre deux éléments transversaux adjacents.

Conformément à une autre caractéristique de l'invention, le matériau élastomère mis en oeuvre est un matériau élastomère à module d'Young élevé et, avantageusement, un tel matériau dont la valeur élevée dudit module est obtenue par une charge incorporée à l'élastomère, par exemple une charge de fibres de matières naturelles ou synthétiques comme des fibres d'aramide ou de polyester présentes dans une proportion comprise entre 5 et 30 % en poids du mélange.

L'emploi d'un tel matériau élastomère permet en outre, après fabrication de la courroie, de procéder à une rectification des flancs latéraux de celle-ci.

L'absence de saillies dans la zone du chapeau d'élastomère permet, par ailleurs, et lorsque la courroie est utilisée dans un dispositif comme un variateur de vitesse, de diminuer le bruit de fonctionnement et d'accroître le rendement de transmission, en raison de la diminution du "brassage" du bain d'huile dans lequel est immergée la courroie.

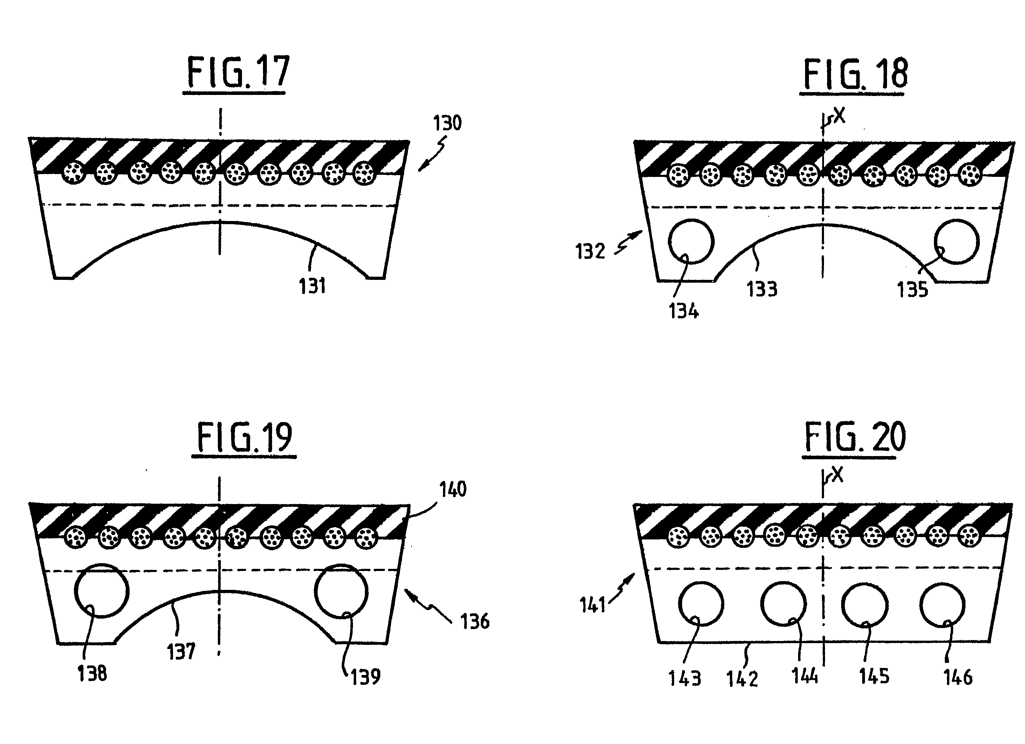

Ce rendement peut encore être accru lorsque, comme dans la réalisation montrée sur la figure 17, les plaquettes ou éléments transversaux 130 présentent un bord intérieur 131, qui, contrairement à celui de la réalisation décrite immédiatement ci-dessus, est courbe avec une concavité tournée vers l'intérieur de la courroie.

C'est à un même résultat que visent les réalisations montrées schématiquement sur les figures 18 à 20. Dans la réalisation selon la figure 18, les plaquettes ou éléments transversaux 132 présentent un bord inférieur 133 incurvé comme dans la réalisation selon la figure 17 ; en outre, et pour encore réduire la traînée hydrodynamique d'une part, et alléger la courroie d'autre part, on prévoit que lesdites plaquettes soient percées d'orifices comme 134 et 135 à disposition symétrique par rapport à l'axe X de la plaquette.

Dans la réalisation selon la figure 19, les éléments transversaux 136 sont également à bord inférieur 137 incurvé, avec des évidements 138 et 139 de dimensions légèrement supé rieures à celle des évidements 134 et 135 de la réalisation précédente et qui, en outre, sont placés par rapport à la masse d'élastomère 140 de manière telle que ladite masse pénètre au moins très légèrement dans lesdits évidements.

Dans la réalisation selon la figure 20, les plaquettes ou éléments transversaux 141 sont à contour général trapézoïdal, avec par conséquent un bord interne 142 de petites dimensions analogue au bord 103 de la réalisation selon les figures 13 à 16, avec toutefois, dans cette réalisation, des évidements 143, 144, 145 et 146 ménagés par des découpes circulaires deux à deux symétriques par rapport à l'axe X d'une plaquette.

**Revendications**

1 - Courroie trapézoïdale sans fin de transmission de puissance comportant une armature longitudinale (A) constituée par un organe résistant à la tension ou une pluralité de tels organes comme des câbles (C), notamment en métal, en fibres de verre, ou en tout matériau synthétique présentant une forte résistance à la tension, des éléments transversaux (10, 100, 130, 132...) métalliques, ou en tout autre matériau présentant une résistance à la compression et une masse d'élastomère (30, 101) qui solidarise les éléments transversaux entre eux et avec l'armature longitudinale, caractérisée en ce que l'armature longitudinale (A) est bloquée au droit d'au moins un élément transversal ($10_1$) par effet de pincement entre ledit élément ou une partie dudit élément et une pièce (35) coopérant avec lui, comme une barrette ou analogue, et qui en est rendu solidaire par tout moyen approprié dans les zones de contact dudit élément ($10_1$) et de ladite pièce (35), exclusivement.

2 - Courroie sans fin selon la revendication 1, caractérisée en ce que ladite pièce (35) est une pièce métallique sensiblement de même épaisseur que celle de l'élément transversal (10, 100, 130, 132...) avec lequel elle coopère et avec lequel elle est solidarisée par soudure par points (50).

3 - Courroie sans fin selon la revendication 1 ou la revendication 2, caractérisée en ce que la soudure par points (50) est une soudure par rayon laser.

4 - Courroie sans fin selon l'une quelconque des revendications précédentes, caractérisée en ce que la longueur de la pièce de pincement (35) (mesurée perpendiculairement à l'armature longitudinale) est une fraction de la longueur de l'élément transversal (10) avec lequel elle coopère.

5 - Courroie sans fins selon l'une quelconque des revendications 1 à 4, caractérisée en ce que chaque élément (10, 100, 130, 132...) est découpé suivant une pluralité d'encoches (16, 107) pour ménager des logements partiels du ou desdits câbles (C) et en ce que la ou les pièces (35, $35_n$) coopérant avec lesdits éléments transversaux (10, 100, 130, 132...) pour le blocage par pincement ou coincement de l'armature longitudinale est(sont) conformée(s) suivant des barrettes plates qui prennent appui sur les zones (39, 109) analogues à des merlons de l'élément transversal ($10_1$, $10_n$) avec lequel elles coopèrent.

6 - Courroie sans fin selon l'une quelconque des revendications 1 à 5, caractérisée en ce que la pièce de blocage (35) de l'armature longitudinale (A) est une barrette dont une face (36) est plane et dont l'autre (37) présente des gorges (38) disposées en correspondance des câbles (C) qu'elle est destinée à pincer ou coincer.

7 - Courroie sans fin selon l'une quelconque des revendications 1 à 5, caractérisée en ce que la pièce de blocage (35) est conformée suivant une barrette obtenue par déformation de métal et épouse ainsi, en partie, le contour apparent de la nappe de câbles (C) tant sur sa face (43) au contact desdits câbles (C) que sur la face (44) opposée à celle-ci.

8 - Courroie sans fin selon l'une quelconque des revendications 1 à 7, caractérisée en ce que les éléments transversaux sont conformés suivant des plaquettes (100, 130, 132...) comportant deux bords latéraux (104, 105) réunis sur leur côté extérieur de plus grande dimension par un bord sensiblement rectiligne (106) dans lequel sont ménagées les encoches (107) de logement partiel des spires du ou des câble(s) (C) constitutif(s) de l'armature (A) et sur leur côté interne opposé de plus petite dimension par un bord rectiligne (103) ou courbe (131) à concavité tournée vers l'intérieur de la courroie.

9 - Courroie sans fin selon la revendication 8, caractérisée en ce que la masse d'élastomère (101) qui solidarise les éléments transversaux (100, 130, 132...) entre eux et avec l'armature longitudinale (A) comprend un chapeau (120) de forme sensiblement trapézoïdale à bords latéraux (121, 122) disposé sensiblement dans le prolongement des bords (104, 105) desdits éléments transversaux (100, 130, 132...).

10 - Courroie sans fin selon l'une quelconque des revendications précédentes, caractérisée en ce que la masse d'élastomère est à module d'Young élevé, cette valeur élevée étant avantageusement obtenue par incorporation dans celle-ci de fibres. naturelles ou synthétiques, comme des fibres aramide ou polyester dans une proportion comprise entre 5 et 30 % en poids du mélange.

11 - Courroie sans fin selon l'une quelconque des revendications précédentes, caractérisée en ce que les plaquettes (132, 136, 141) sont munies d'évidements (134, 135 ; 138, 139 ; 143-146).

12 - Courroie sans fin selon l'une quelconque des revendications précédentes, caractérisée en ce que le ou les câbles (C) qui forment l'armature longitudinale sont disposés suivant une nappe formant une hélice simple ou une hélice double (21, 22), les deux hélices (21, 22) étant équitendues et de pas contraires.

13 - Courroie sans fin selon l'une quelconque des revendications précédentes, caractérisée en ce que l'armature longitudinale (A) de la courroie repose sur chacun des éléments transversaux (10, 100...) avec interposition d'une mince couche d'élastomère (16, 118) entre l'armature et l'élément, ladite couche étant obtenue par un revêtement desdites encoches ou par une gaine (18, 108) des câbles (C) de ladite armature.

14 - Procédé de fabrication d'une courroie trapézoïdale sans fin de transmission de puissance comportant une armature longitudinale (A) constituée par un organe filiforme ou une pluralité de tels organes comme des câbles (C) notamment en métal, fibres de verre ou en tout matériau synthétique présentant une forte résistance à la tension, des éléments transversaux métalliques ou en un matériau présentant une forte résistance à la compression, ainsi qu'une masse d'élastomère qui solidarise les éléments transversaux entre eux et avec l'armature longitudinale après que lesdits éléments transversaux aient été mis en place sur un noyau (61) à fentes (60) périphériques radiales et que l'armature ait été disposée sur le fond desdits évidements et mise sous tension, caractérisé en ce que l'on rapporte sur au moins un desdits éléments transversaux (10₁) une pièce de blocage (35) des extrémités de ladite armature longitudinale, en ce que l'on applique à force ladite pièce sur ledit élément transversal pour bloquer par pincement ou coincement les extrémités de l'armature, en ce que l'on solidarise entre eux ladite pièce (35) et l'élément transversal (10₁) avec lequel elle coopère par une soudure par points et en ce que l'on moule ensuite l'élastomère (30).

15 - Procédé selon la revendication 14, caractérisé en ce qu'après sectionnement à longueur voulue de l'armature longitudinale (A), les moignons de celle-ci, c'est-à-dire les parties qui s'étendent entre l'extrémité libre non fixée à un élément transversal et la zone de blocage sur ledit élément, sont également coincés à leurs autres extrémités libres sur un élément transversal (10ₙ) voisin de celui (10₁) déjà utilisé pour le coincement de ladite armature.

16 - Procédé selon la revendication 14 ou 15, caractérisé en ce que, après fabrication, on soumet les flancs latéraux de la courroie à une opération d'usinage, comme une rectification ou analogue.

**Patentansprüche**

1. Endloskeilriemen für Kraftübertragung, umfassend eine Längsarmierung (A), die von einem für Spannung widerstandsfähigen Organ oder einer Mehrzahl solcher Organe gebildet ist, wie Kabel (C), insbesondere aus Metall, aus Glasfaser, oder aus jedem Kunststoffmaterial, das einen starken Widerstand gegen Spannung aufweist, Querelemente (10, 100, 130 132...), die metallisch oder aus jedem anderen Material, das einen Widerstand gegen Kompression aufweist, sind, und eine Elastomermasse (30, 101), welche die Querelemente untereinander und mit der Längsarmierung fest verbindet, dadurch gekennzeichnet, daß die Längsarmierung (A) in der Nähe von einem Querelement (10₁) durch Klemmungswirkung zwischen diesem Element oder einem Teil dieses Elements und einem damit zusammenwirkenden Teil (35), wie einem Steg oder ähnlichem, blockiert ist, und das damit durch jedes geeignete Mittel ausschließlich in den Kontaktzonen dieses Elements (10₁) und dieses Teils (35) fest verbunden ist.

2. Endlosriemen nach Anspruch 1, dadurch gekennzeichnet , daß das erwähnte Teil (35) ein metallisches Teil von im wesentlichen der gleichen Dicke wie derjenigen des Querelements (10, 100, 130, 132...) ist, mit dem es zusammenwirkt und mit dem es durch Punktschweißung (50) fest verbunden ist.

3. Endlosriemen nach Anspruch 1 oder Anspruch 2, dadurch gekennzeichnet, daß die Punktschweißung (50) eine Schweißung durch Laserstrahl ist.

4. Endlosriemen nach irgendeinem der vorhergehenden Ansprüche, dadurch gekennzeichnet, daß die Länge des Klemmungsteils (35) (gemessen senkrecht zu der Längsarmierung) ein Bruchteil der Länge des Querelements (10) ist, mit dem es zusammenwirkt.

5. Endlosriemen nach irgendeinem der Ansprüche 1 bis 4, dadurch gekennzeichnet, daß jedes Element (10, 100, 130, 132...) gemäß einer Mehrzahl von Ausschnitten (16, 107) ausgeschnitten ist, so daß Teilunterbringungen für das oder die Kabel (C) angebracht sind, und daß das oder die Teile (35, 35ₙ), die bzw. das mit den erwähnten Querelementen (10, 100, 130, 132...) zum Blockieren durch Klemmung oder Verkeilung der Längsarmierung zusammenwirkt bzw. -wirken, gemäß flachen Stegen gestaltet ist (sind), welche auf den entsprechenden Zonen (39, 109) an den Zacken des Querelements (10₁, 10ₙ) anliegen, mit dem sie zusammenwirken.

6. Endlosriemen nach irgendeinem der Ansprüche 1 bis 5, dadurch gekennzeichnet, daß das Blockierungsteil (35) für die Längsarmierung (A) ein Steg ist, dessen eine Seite (36) eben ist und dessen andere (37) Nuten (38) aufweist, die in Entsprechung der Kabel (C) angeordnet sind, zu deren Klemmung oder Verkeilung er bestimmt ist.

7. Endlosriemen nach irgendeinem der Ansprüche 1 bis 5, dadurch gekennzeichnet, daß das Blockierungsteil gemäß einem Steg gestaltet ist, der durch Deformation von Metall erhalten worden ist und sich so in einem Teil der scheinbaren Kontur der Schicht von Kabeln (C) sowohl auf seiner Seite (43), die in Kontakt mit diesen Kabeln (C) ist, als auch auf der dazu entgegengesetzten Seite (44) anpaßt.

8. Endlosriemen nach irgendeinem der Ansprüche 1 bis 7, dadurch gekennzeichnet , daß die Querelemente gemäß Plättchen (100, 130, 132...) gestaltet sind, die zwei seitliche Ränder (104, 105) aufweisen, welche auf ihrer äußeren Seite größter Abmessung durch einen im wesentlichen geradlinigen Rand (106) verbunden sind, in dem die Ausschnitte (107) für die teilweise Unterbringung der Windungen des Kabels (c) oder der Kabel, welches bzw. welche die Armierung (A) bildet bw. bilden, angebracht sind, und die auf ihrer entgegengesetzten inneren Seite kleinster Abmessung von einem geradlinigen Rand (103) oder einer Kurve (131) mit Konkavität, welche nach dem Inneren des Riemens gewandt ist, verbunden sind.

9. Endlosriemen nach Anspruch 8, dadurch gekennzeichnet, daß die Elastomermasse (101), welche die Querelemente (100, 130, 132...) untereinander und mit der Längsarmierung (A) fest verbindet, eine Abdeckung (120) von im wesentlichen Trapezform mit seitlichen Rändern (121, 122), die im wesentlichen in der Verlängerung der Ränder (104, 105) der erwähnten Querelemente (100, 130, 132...) angeordnet sind, umfaßt.

10. Endlosriemen nach irgendeinem der vorhergehenden Ansprüche, dadurch gekennzeichnet , daß die Elastomermasse einen erhöhten Young'schen Modul hat, wobei dieser erhöhte Wert vorteilhafterweise dadurch erhalten wird, daß dieser natürliche oder synthetische Fasern inkorporiert sind, wie Aramid- oder Polyesterfasern in einem Anteil, der zwischen 5 und 30 Gew.-% der Mischung beträgt.

11. Endlosriemen nach irgendeinem der vorhergehenden Ansprüche, dadurch gekennzeichnet, daß die Plättchen (132, 136, 141) mit Aussparungen (134, 135; 138, 139; 143-146) versehen sind.

12. Endlosriemen nach irgendeinem der vorhergehenden Ansprüche, dadurch gekennzeichnet, daß das oder die Kabel (C), welche die Längsarmierung bilden, gemäß einer Schicht angeordnet sind, die eine einfache Schraubenlinie oder eine doppelte Schraubenlinie (21, 22) bildet, wobei die beiden Schraubenlinien (21, 22) gleichgespannt und von entgegengesetztem Gang sind.

13. Endlosriemen nach irgendeinem der vorhergehenden Ansprüche, dadurch gekennzeichnet, daß die Längsarmierung (A) des Riemens auf jedem der Querelemente (10, 100...) ruht, und zwar unter Zwischenfügung einer dünnen Elastomerschicht (16, 118) zwischen der Armierung und dem Element, wobei diese Schicht durch eine Auskleidung der erwähnten Ausschnitte oder durch eine Hülle (18, 108) der Kabel (C) der erwähnten Armierung erhalten wird.

14. Verfahren zur Herstellung eines Endloskeilriemens für Kraftübertragung, der eine Längsarmierung (A) umfaßt, die von einem fadenförmigen Organ oder einer Mehrzahl solcher Organe gebildet ist, wie Kabeln (C), insbesondere aus Metall, Glasfasern oder jedem synthetischen Material, das einen starken Widerstand gegen Spannung aufweist, Querelemente, die metallisch sind oder aus einem Material, das einen starken Widerstand gegen Kompression aufweist, wie auch eine Elastomermasse, welche die Querelemente untereinander und mit der Längsarmierung fest verbindet, nachdem diese Querelemente auf einem Kern (61) mit peripheren radialen Schlitzen (60) an Ort und Stelle gebracht worden sind und die Armierung auf dem Boden der erwähnten Aussparungen angeordnet und unter Spannung gebracht worden ist, dadurch gekennzeichnet, daß man auf wenigstens eines dieser Querelemente (10$_1$) ein Blockierungsteil (35) für die Enden dieser Längsarmierung bringt, und daß man dieses Teil mit Kraft auf dieses Querelement aufbringt, um die Enden der Armierung durch Klemmung oder Verkeilung zu blockieren, daß man dieses Teil (35) und das Querelement (10$_1$), mit dem es zusammenwirkt, durch eine Punktschweißung miteinander fest verbindet, und daß man danach das Elastomer (30) formt.

15. Verfahren nach Anspruch 14, dadurch gekennzeichnet, daß nach Teilung der Längsarmierung (A) in willkürlicher Länge die Stummeln derselben, d.h. die Teile, die sich zwischen dem freien Ende, das nicht an einem Querelement befestigt ist, und der Zone der Blockierung auf den ewähnten Element erstrecken, ebenfalls an ihren anderen freien Enden auf einem Querelement (10$_n$) benachbart demjenigen (10$_1$) das schon für das Verkeilen der erwähnten Armierung verwendet worden ist, verkeilt werden.

16. Verfahren nach Anspruch 14 oder 15, dadurch gekennzeichnet, daß man die seitlichen Flanken des Riemens nach der Herstellung einem Bearbeitungsvorgang unterwirft, wie einem Schleifen oder ähnlichem.

**Claims**

1. An endless trapezoidal power transmission belt comprising a longitudinal reinforcement (A) consisting of a tension-resistant member or a plurality of such members, such as cables (C), particularly of metal, of glass fibres, or of any synthetic material having a strong resistance to tension, transverse elements (10, 100, 130, 132.....) which are metallic or of any other material having a resistance to compression, and a mass of elastomer (30, 101) which rigidly connects the transverse elements to one another and to the longitudinal reinforcement, characterised in that the longitudinal reinforcement (A) is locked at right angles to at least one transverse element (10$_1$) by a gripping effect between said element or a portion of said element and a component (35) cooperating with it, such as a small bar or the like, and which is rigidly connected thereto by any appropriate means in the contact zones between said element (10$_1$) and said component (35), exclusively.

2. An endless belt according to claim 1, characterised in that said component (35) is a metallic component of substantially the same thickness as that of the transverse element (10, 100, 130, 132....) with which it cooperates and to which it is rigidly connected by spot-welding (50).

3. An endless belt according Claim 1 or Claim 2, characterised in that the spot-welding (50) is laser-beam welding.

4. An endless belt according to any one of the preceding Claims, characterised in that the length of the gripping component (35) (measured perpendicularly to the longitudinal reinforcement) is a fraction of the length of the transverse element (10) with which it cooperates.

5. An endless belt according to any one of the Claims 1 to 4, characterised in that each element (10, 100, 130, 132.....) is cut out in a plurality of notches (16, 107) to form the partial seatings of said cable or cables (C) and in that the component or components (35, $35_n$) cooperating with said transverse elements (19, 100, 130, 132....) for the locking by gripping or wedging of the longitudinal reinforcement is (are) formed in the shape of flat bars which rest on the zones (39, 109) resembling barricades of the transverse element ($10_i$, $10_n$) with which they cooperate.

6. An endless belt according to any one of the Claims 1 to 5, characterised in that the component (35) for locking the longitudinal reinforcement (A) is a small bar of which one face (36) is plane and of which the other (37) comprises grooves (38) disposed in correspondence with the cables (C) which it is adapted to grip or wedge.

7. An endless belt according to any one of the Claims 1 to 5, characterised in that the locking component (35) is formed in the shape of a small bar obtained by deformation of metal and thus corresponds partly in shape to the visible contour of the layer of cables (C) both on its face (43) in contact with said cables (C) and on the face (44) opposite to this.

8. An endless belt according to any one of the Claims 1 to 7, characterised in that the transverse elements are formed in the shape of small plates (100, 130, 132.....) comprising two lateral edges (104, 105) joined at their external side having the larger dimension by a substantially rectilinear edge (106) in which there are formed the notches (107) for the partial seating of the turns of of the cable or cables (C) constituting the reinforcement (A) and at their opposite internal side of smaller dimension by a rectilinear edge (103) or curved edge (131) with the concavity turned towards the interior of the belt.

9. An endless belt according to Claim 8, characterised in that the mass of elastomer (101) which rigidly connects the transverse elements (100, 130, 132.....) to one another and to the longitudinal reinforcement (A) comprises a top (120) which is substantially trapezoidal in shape with lateral edges (121, 122) disposed substantially in the extension of the edges (104, 105) of said transverse elements (100, 130, 132.....)

10. An endless belt according to any one of the preceding Claims, characterised in that the mass of elastomer has a high modulus of elasticity, this high value being advantageously obtained by incorporation therein of natural or synthetic fibres such as aramid or polyester fibres in a proportion comprised between 5 and 30% by weight of the mixture.

11. An endless belt according to any one of the preceding Claims, characterised in that the small plates (132, 136, 141) are provided with apertures (134, 135; 138, 139; 143-146).

12. An endless belt according to any one of the preceding Claims, characterised in that the cable or cables (C) which form the longitudinal reinforcement are arranged in a layer forming a simple helix or a double helix (21, 22), the two helices (21, 22) being equally taut and of opposite hand.

13. An endless belt according to any one of the preceding Claims, characterised in that the longitudinal reinforcement (A) of the belt rests on each of the transverse elements (10, 100.....) with the interposition of a thin layer of elastomer (16, 118) between the reinforcement and the element, said layer being obtained by a lining of said notches or by a sheath (18, 108) of the cables (C) of said reinforcement.

14. A process for the manufacture of an endless trapezoidal power transmission belt comprising a longitudinal reinforcement (A) consisting of a filiform member or a plurality of such members such as cables (C), particularly of metal, glass fibres or of any synthetic material having a high resistance to tension, transverse elements which are metallic or of a material having a high resistance to compression, as well as a mass of elastomer which rigidly connects the transverse elements to one another and to the longitudinal reinforcement after said transverse elements have been placed in position on a core (61) with radial peripheral slots (60) and the reinforcement has been disposed at the bottom of said recesses and tensioned, characterised in that a component (35) for locking the ends of said longitudinal reinforcement is fitted on at least one of said transverse elements ($10_i$) in that said component is applied by force to said transverse element to lock the ends of the reinforcement by gripping or wedging, in that said component (35) and the transverse element ($10_i$) with which it cooperates are rigidly connected to one another by spot-welding and in that the elastomer (30) is then moulded.

15. A process according to claim 14, characterised in that after the longitudinal reinforcement (A) has been cut to the desired length, the stumps of this, that is to say the portions which extend between the free end which is not fixed to a transverse element and the zone where it is locked to said element, are likewise wedged, at their other free ends, onto a transverse element ($10_n$) near to that ($10_i$) already used for wedging said reinforcement.

16. A process according to Claim 14 or 15, characterised in that, after manufacture, the lateral flanks of the belt are subjected to a machining operation such as grinding or the like.

## FIG.1

## FIG. 2

## FIG.3

## FIG. 4

FIG.5

27

23    26

FIG.6

10

C

60

61

30    35

35n

C

10₁

10n

FIG.7

FIG. 12

35    C    15

10₁

EP 0 242 263 B1

FIG. 8

FIG. 9

FIG. 10

FIG. 11

FIG.13

FIG.14

FIG.15

FIG.16

FIG.17

FIG.18

FIG.19

FIG.20